# EUROPEAN PATENT APPLICATION

(11) **EP 4 141 698 A1**
(43) Date of publication of application: **01.03.2023**
(21) Application number: 21812955.9
(22) Date of filing: 25.05.2021
(51) Int. Cl.: G06F 16/36, G06F 16/383

(54) **INFORMATION RETRIEVAL SYSTEM**

(30) Priority: 28.05.2020 JP 2020093682
(71) Applicant: JFE Steel Corporation, Tokyo 100-0011 (JP)
(72) Inventor: TAKEMURA Yusuke, Tokyo 100-0011 (JP); ETO Ayaka, Tokyo 100-0011 (JP); MOROOKA Nobuyuki, Tokyo 100-0011 (JP); KARIYA Akira, Tokyo 100-0011 (JP); KUWABARA Satoshi, Tokyo 100-0011 (JP); SHIGEOKA Daiki, Tokyo 100-0011 (JP); TAKENAKA Shudo, Tokyo 100-0011 (JP); ITO Daigo, Tokyo 100-0011 (JP)
(74) Representative: Grünecker Patent- und Rechtsanwälte PartG mbB
(86) International application number: PCT/JP2021/019883
(87) International publication number: WO 2021/241601

(57) **Abstract**

Provided is an information search system that enables a searcher to efficiently find information they want to know, the system including: a database (12) that stores a plurality of pieces of information that are text-searchable; a query sentence acceptance unit (26) that accepts a query sentence in a natural language format; an inputted search keyword extractor (44) that extracts an inputted search keyword from the query sentence; a retrieval executor (40) that executes retrieval processing from the database using the inputted search keyword, along with a keyword relevant to the inputted search keyword; and a keyword dictionary (30) in which words associated with categories are registered, wherein the retrieval executor acquires, from the keyword dictionary, words associated with one of the categories selected by a searcher, re-sorts information retrieved as a result of the retrieval processing, based on the acquired words, and displays the information to the searcher.

## Description

### TECHNICAL FIELD

The present disclosure relates to an information search system.

### BACKGROUND

Data written on paper (paper data) has been used as material for maintenance operations in manufacturing and other industries. It is important to digitize such paper data and store it together into databases in information search systems for maintenance operations. Advances in retrieval technology have improved the accuracy of search results, and paper data is being digitized and compiled into databases.

For example, in manufacturing industries, failures and faults of apparatuses or the like, their causes and solutions, and so on are compiled into databases every time they occur, and the databases are referred to as past cases in the event of similar failures or faults, so as to prevent failures and shorten recovery times. The databases also contain information, such as work standards or manuals. The amount of information stored in the databases is therefore enormous.

Examples of conventional methods of acquiring necessary information from such an enormous amount of data include text search processing in which a given string is used as a keyword and any data matching the keyword is outputted as search results. For example, Patent Literature 1 describes an information search system that enables even those with limited knowledge and experience who have difficulty in entering an appropriate keyword to achieve good search results.

### CITATION LIST

### Patent Literature

PTL 1: JP 2019-121392 A

### SUMMARY

### (Technical Problem)

Here, in the conventional technique, search results are displayed in an order determined by the information search system. For example, in a case in which a potential cause of a fault of an apparatus is to be searched for, only those data that are related to typical causes are displayed at the top of search results, and data that are related to non-typical causes may not be found easily. As a result, it may take long to address the fault.

It would be helpful to provide an information search system that enables a searcher to efficiently find information they want to know.

### (Solution to Problem)

An information search system according to the present disclosure includes:
a database configured to store a plurality of pieces of information that are text-searchable;
a query sentence acceptance unit configured to accept a query sentence in a natural language format;
an inputted search keyword extractor configured to extract an inputted search keyword from the query sentence;
a retrieval executor configured to execute retrieval processing from the database using the inputted search keyword, along with a keyword relevant to the inputted search keyword; and
a keyword dictionary in which words associated with categories are registered, wherein
the retrieval executor is configured to acquire, from the keyword dictionary, words associated with one of the categories selected by a searcher, re-sort information retrieved as a result of the retrieval processing, based on the acquired words, and display the information to the searcher.

### (Advantageous Effect)

According to the present disclosure, an information search system that enables a searcher to efficiently find information they want to know can be provided.

### BRIEF DESCRIPTION OF THE DRAWINGS

In the accompanying drawings:
FIG. 1 is a block diagram illustrating a schematic configuration of an information search system according to an embodiment of the present disclosure;
FIG. 2 illustrates examples of keywords stored in a keyword dictionary;
FIG. 3 illustrates examples of information-type determining keywords that are stored in an information-type determining dictionary;
FIG. 4 illustrates search results that are displayed;
FIG. 5 is a flowchart illustrating operations of the information search system according to the embodiment;
FIG. 6 is a flowchart in continuation of FIG. 5; and
FIG. 7 is a functional block diagram illustrating a computer.

### DETAILED DESCRIPTION

In the present embodiment, an information search system compiles a text-searchable information database from equipment maintenance work information in manufacturing industries. The following will describe, by way of an example, the information search system that enables a searcher to retrieve information on useful past cases from the database when a failure or fault occurs, by entering the situation as a sentence. The searcher can perform equipment recovery work based on the retrieved information. Herein, the equipment maintenance work information includes, for example, information, such as work standards or manuals that describe failures and faults of apparatuses or the like, their causes and solutions, and so on. In the following, cases related to failures or faults may be referred to as "failure cases."

The intended use of retrieval using the information search system according to the present disclosure is not limited to the above. The information search system according to the present disclosure can be used for other intended uses than to assist in equipment maintenance work, such as equipment failure recovery work. The information search system according to the present disclosure can be applied, for example, in the field of sales, in order to retrieve past cases and provide optimal responses to customer inquiries. The information search system according to the present disclosure can be applied, for example, in the field of product design, in order to search for similar manufacturing records or literatures, such as technical papers, and suggest optimal product designs, in response to requests from customers.

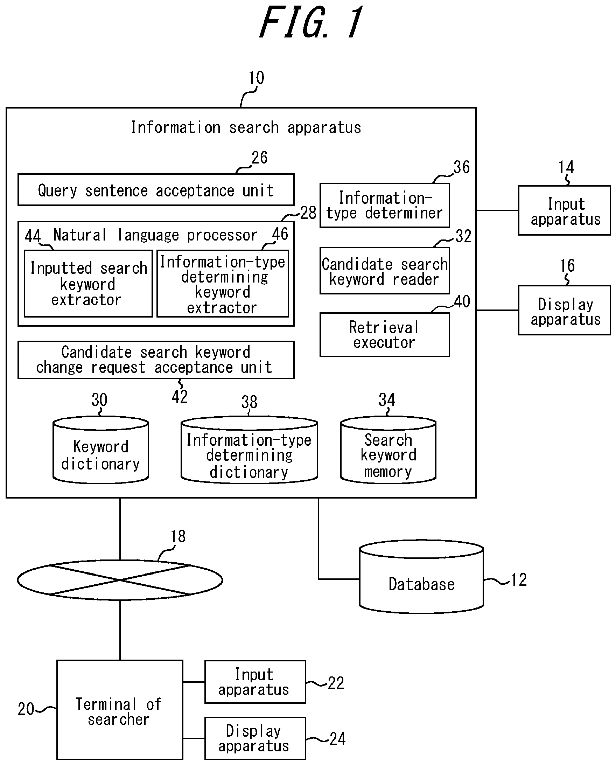

FIG. 1 is a block diagram illustrating a schematic configuration of the information processing system according to the embodiment of the present disclosure. The information search system is configured to include an information search apparatus 10 that executes search processing, a database 12 that stores a plurality of pieces of information that are text-searchable, an input apparatus 14, such as a keyboard or a mouse, that is connected to the information search apparatus 10, a display apparatus 16, such as a display, that is connected to the information search apparatus 10, and a terminal 20 of a searcher that is connected to the information search apparatus 10 via a network 18.

The network 18 is a communication network, such as a Local Area Network (LAN). The network 18 is, however, not limited to this. The network 18 may be a public communication network, such as the Internet, or a communication network, such as a Wide Area Network (WAN) or a Virtual Private Network (VPN), that extends across a general public network. The information search apparatus 10 and the terminal 20 of the searcher are each embodied by a computer and a program. Examples of the terminal 20 of the searcher may include a Personal Computer (PC) and a tablet computer, and an input apparatus 22 and a display apparatus 24 may be connected to or integrated with the terminal 20 of the searcher.

Herein, the configuration of the information search system of FIG. 1 is an example, and some of the components may be omitted. The information search system may also include other components. For example, the information search system may be configured without the input apparatus 14 and the display apparatus 16, and information may be inputted or outputted using a terminal 20 of a searcher.

Documents, drawings, photographs, or the like are stored in the database 12. Sentences are not limited to originally inputted text, and they may include text converted from audio using a speech recognition engine, or text converted from sentences written on a paper medium using Optical Character Recognition (OCR). In a case in which drawings or photographs are stored, search processing can be performed on characters embedded in the drawings or on the file names. Information stored in the database 12 includes information, such as work standards, manuals, or the like, on failures and faults of apparatuses or the like, their causes and solutions, and so on. In the present embodiment, the database 12 contains a plurality of failure cases.

The information search apparatus 10 is configured to include a query sentence acceptance unit 26, a natural language processor 28, a keyword dictionary 30, a candidate search keyword reader 32, a search keyword memory 34, an information-type determiner 36, an information-type determining dictionary 38, a retrieval executor 40, and a candidate search keyword change request acceptance unit 42. The natural language processor 28 includes an inputted search keyword extractor 44 and an information-type determining keyword extractor 46. Herein, the configuration of the information search apparatus 10 of FIG. 1 is an example, and some of the components may be omitted. The information search apparatus 10 may also include other components. For example, the information search apparatus 10 may be configured without the keyword dictionary 30 and the information-type determining dictionary 38, and these dictionaries may be located outside the information search apparatus 10 and accessed via the network 18.

Generally speaking, these functional blocks have the following functions. The query sentence acceptance unit 26 sequentially accepts, through the network 18, a query sentence in a natural language format that has been entered by a searcher via the input apparatus 22 of a terminal 20 of the searcher. For example, query sentences, such as "A failure of the apparatus ×× has occurred in the equipment oo. Are there any similar examples in the past?", "What are the failures with the failure type ΔΔ?", "What is the procedure for replacing the part □□?", or "What is the cause of inverter tripping?" may be sequentially inputted to the terminal 20 of the searcher in the natural language format.

The natural language processor 28 performs natural language processing, such as known morphological analysis, on a query sentence received by the query sentence acceptance unit 26, so as to extract words. The inputted search keyword extractor 44 of the natural language processor 28 extracts, from the inputted query sentence, an inputted search keyword to be used for retrieval. For this extraction, the inputted search keyword extractor 44 can refer, for example, to the keyword dictionary 30, which will be explained in detail later, so as to extract a word registered in the keyword dictionary 30 as the inputted search keyword. For example, in a case in which the query sentences "A failure of the apparatus ×× has occurred in the equipment oo. Are there any similar examples in the past?" are inputted, the inputted search keyword extractor 44 extracts the words "equipment oo" and "apparatus ××" as inputted search keywords. For example, in a case in which the query sentence "What are the failures with the failure type ΔΔ?" is inputted, the inputted search keyword extractor 44 extracts the word "failure ΔΔ" as an inputted search keyword. For example, in a case in which the query sentence "What is the procedure for replacing the part □□?" is inputted, the inputted search keyword extractor 44 extracts the word "part □□" as an inputted search keyword. For example, in a case in which the query sentence "What is the cause of inverter tripping?" is inputted, the inputted search keyword extractor 44 extracts the words "inverter" and "tripping" as inputted search keywords.

The information-type determining keyword extractor 46 of the natural language processor 28 extracts, from an inputted query sentence, an information-type determining keyword that is to be used to determine an information type corresponding to the purpose of the search. For this extraction, the information-type determining keyword extractor 46 can refer to the information-type determining dictionary 38, which will be described in detail later, so as to extract a word registered in the information-type determining dictionary 38 as the information-type determining keyword. For example, in a case in which the query sentences "A failure of the apparatus ×× has occurred in the equipment oo. Are there any similar examples in the past?" are inputted, the information-type determining keyword extractor 46 extracts the words "failure" and "similar example" as information-type determining keywords. For example, in a case in which the query sentence "What are the failures with the failure type ΔΔ?" is inputted, the information-type determining keyword extractor 46 extracts the word "failure type" as an information-type determining keyword. For example, in a case in which the query sentence "What is the procedure for replacing the part □□?" is inputted, the information-type determining keyword extractor 46 extracts the word "replacement procedure" as an information-type determining keyword. For example, in a case in which the query sentence "What is the cause of inverter tripping?" is inputted, the information-type determining keyword extractor 46 extracts the word "cause" as an information-type determining keyword.

In the keyword dictionary 30, relevant keywords are registered and stored in advance in association with each other. In the present embodiment, keywords that are synonymous with each other are registered in association with each other in the keyword dictionary 30. Keywords that have similar meanings to each other are also registered in association with each other in the keyword dictionary 30. It is to be noted, however, that only the keywords that are synonymous with each other, or only the keywords that have similar meanings to each other may be registered in the keyword dictionary 30. Alternatively, or in addition, keywords that are considered to be highly relevant to each other can be registered in advance in association with each other.

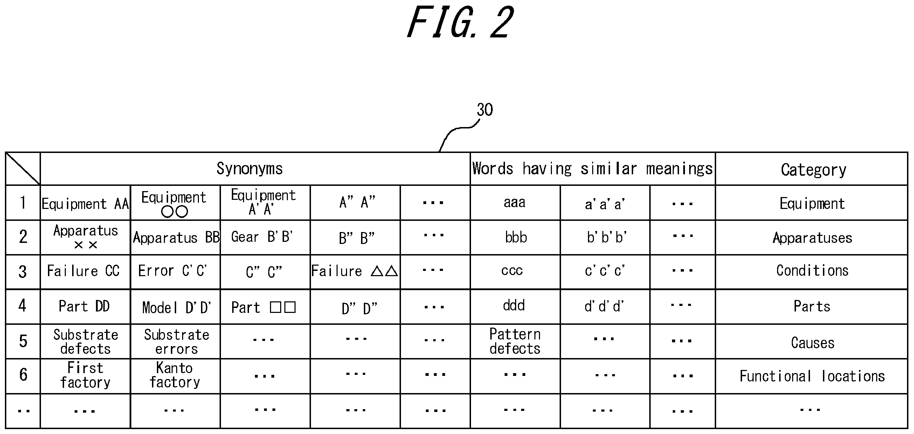

FIG. 2 illustrates examples of keywords registered in advance in the keyword dictionary 30. Keywords belonging to the same row are relevant to each other and are associated with each other. Here, registered keywords (words) are also associated with categories. The categories will be described in detail later.

The candidate search keyword reader 32 refers to the keyword dictionary 30 every time the inputted search keyword extractor 44 extracts an inputted search keyword, so as to read out keywords that are relevant to the inputted search keyword as candidate search keywords. For example, in a case in which an inputted search keyword is "equipment oo", the candidate search keyword reader 32 reads out, from the keyword dictionary 30, "equipment AA", "equipment A'A‴, and "A"A"" as the synonyms, and "aaa" and "a'a'a"' as words having similar meanings. In other words, the candidate search keyword reader 32 reads out "equipment AA", "equipment A'A'", "A"A"", "aaa", and "a'a'a"' as candidate search keywords. At this time, the candidate search keyword reader 32 may read out not all, but only some of the synonyms and the words having similar meanings from the keyword dictionary 30 and use them as candidate search keywords. In one example, the candidate search keyword reader 32 may read out only the synonyms.

The search keyword memory 34 stores an inputted search keyword and candidate search keywords that are acquired as described above, as search keywords. When, for example, a query sentence is additionally inputted, the search keyword memory 34 may cumulatively store an additional inputted search keyword, along with additional search candidate keywords, as search keywords.

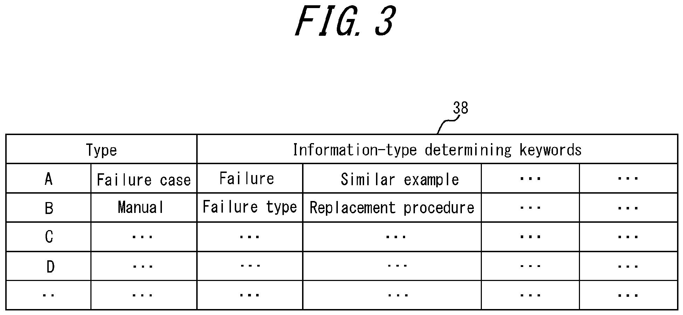

The information-type determiner 36 determines the purpose of search, based on an information-type determining keyword that has been extracted from a query sentence. The information-type determiner 36 refers to the information-type determining dictionary 38 and determines an information type to be retrieved, based on the information-type determining keyword. FIG. 3 illustrates examples of information-type determining keywords stored in the information-type determining dictionary 38. In the information-type determining dictionary 38, information-type determining keywords, which can be extracted from query sentences, and information types that correspond with the information-type determining keywords are registered in association with each other. For example, "failure case" is registered as an information type of the information-type determining keywords "failure" and "similar example." For example, "manual" is registered as an information type of the information-type determining keywords "failure type" and "replacement procedure." On the other hand, information stored in the database 12 is classified into a plurality of groups by information type for management purposes. For example, in the database 12, any "failure case" may be stored under one folder, and any "manual" may be stored under another folder.

The retrieval executor 40 performs text-based retrieval processing on information stored in the database 12 using search keywords stored in the search keyword memory 34. That is, the retrieval executor 40 executes retrieval processing from the database 12 using an inputted search keyword, along with keywords relevant to the inputted search keyword. The retrieval executor 40 performs retrieval processing on information that belongs to a group corresponding at least to the information type determined by the information-type determiner 36 among the plurality of groups in the database 12.

The retrieval executor 40 acquires words associated with one category selected by a searcher from the keyword dictionary 30. The retrieval executor 40 re-sorts information that has been retrieved as a result of the retrieval processing, based on the acquired words, and displays the information to the searcher. That is, the retrieval executor 40 re-sorts the retrieved information according to the category specified by the searcher, and causes the display apparatus 24 to display the search results, for example.

In the present embodiment, a searcher can select one of six categories and have the search results re-sorted according to the selected category, so as to efficiently find information they want to know. The six categories are functional locations, equipment, apparatuses, parts, conditions, and causes. Functional locations are a category into which words that represent functional locations are classified, and more specifically, this is a category related to processes and factories used for mass manufacturing of products on assembly lines. Equipment is a category into which words that represent equipment are classified, and more specifically, this is a category related to manufacturing machines. Manufacturing machines classified in the category of equipment include those that are identified by manufactured products, such as "plate mills." Apparatuses are a category into which words that represent apparatuses are classified, and more specifically, this is a category related to products that are electrical items, in particular. Parts are a category into which words that represent parts are classified, and more specifically, this is a category related to parts of products, that is, components of the products that do not have the functions of the products by themselves. Conditions are a category into which words that represent, in particular, failure conditions are classified. Causes are a category into which words that represent, in particular, failure causes are classified. The plurality of categories defined in the information search system according to the present embodiment are not limited to the aforementioned six categories. Some of the aforementioned six categories may be omitted, and categories different from the aforementioned six categories may also be included.

As illustrated in FIG. 2, words that contain keywords for search are registered in association with categories in the keyword dictionary 30. For example, "equipment AA", along with the synonyms and words having similar meanings, are associated with the category of equipment. For example, "apparatus ××", along with the synonyms and words having similar meanings, are associated with the category of apparatuses. For example, "failure CC", along with the synonyms and words having similar meanings, are associated with the category of conditions. For example, "part DD", along with the synonyms and words having similar meanings, are associated with the category of parts. For example, "substrate defects", along with the synonyms and words having similar meanings, are associated with the category of causes. For example, "first factory", along with the synonyms, are associated with the category of functional locations. The words listed in the leftmost column under Synonyms in FIG. 2 are referred to as representative words. Each category is associated with a plurality of representative words, along with their synonyms and words having similar meanings. For example, the category of causes is associated not only with substrate defects but also with control, performance, waveforms, loads, or the like, along with their synonyms and words having similar meanings. Here, although in the present embodiment the keyword dictionary 30 manages synonyms and words having similar meanings to representative words, in addition to the categories all together, they can also be managed separately.

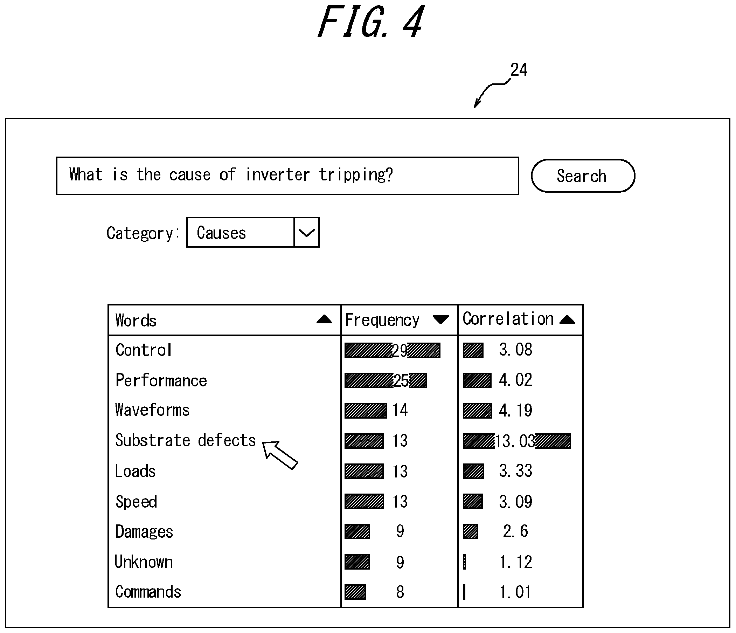

FIG. 4 illustrates search results that are displayed, for example, on a display apparatus 24 after retrieval processing. In the example of FIG. 4, the retrieval executor 40 performs retrieval processing from the database 12 in response to the query sentence "What is the cause of inverter tripping?", and acquires a plurality of pieces of retrieved information. In the following, the retrieved plurality of pieces of information may be referred to as "detected information." As illustrated in FIG. 4, a searcher can select one of the six categories via a pull-down menu labeled Category. In the example of FIG. 4, the searcher has selected "causes." The retrieval executor 40 acquires words (representative words, and their synonyms and words having similar meanings) that are associated with "causes", which are the category selected by the searcher, from the keyword dictionary 30. In the example of FIG. 4, control, performance, waveforms, substrate defects, loads, speed, damages, unknown, and commands correspond to the representative words acquired from the keyword dictionary 30.

The retrieval executor 40 re-sorts the detected information, based on the acquired words (the representative words, and their synonyms and words having similar meanings). The retrieval executor 40 re-sorts the retrieved information according to the frequency with which each acquired word appears, or according to the degree of correlation with each acquired word. The frequency with which each acquired word appears is the number of occurrences of the word in those pieces of retrieved information. In the example of FIG. 4, substrate defects, and their synonyms and words having similar meanings are contained in 13 pieces of retrieved information. In the example of FIG. 4, the retrieval executor 40 re-sorts the retrieved information in order of frequency using the words associated with the category "causes", and displays the information to the searcher. By clicking on "substrate defects", for example, the searcher can display detailed information on failure cases, including substrate defects.

The degree of correlation with each acquired word is a measure of how strongly the retrieved information is related to the word compared to a plurality of pieces of information in the database 12, excluding the retrieved information. The degree of correlation can be calculated by a known method, such as tf-idf, for example. The method of calculating the degree of correlation is, however, not limited to this. The retrieval executor 40 may be capable of re-sorting the retrieved information using the words associated with one category selected by the searcher, and displaying the information to the searcher.

In the present embodiment, in the keyword dictionary 30, words that represent failure causes and that are described in a plurality of pieces of information stored in the database 12 are registered in association with causes, which are one of the categories. Similarly, in the keyword dictionary 30, words that represent failure conditions and that are described in the plurality of pieces of information stored in the database 12 are registered in association with conditions, which are one of the categories. The retrieval executor 40 acquires, from the keyword dictionary 30, words that are associated with the category of causes or conditions that has been selected by the searcher, re-sorts retrieved information based on the acquired words, and displays the information to the searcher. In conventional search systems, retrieved information is displayed in order of the number of hits retrieved, for example. For this reason, in a case in which a searcher wants to know a failure cause or a failure condition, information describing common causes or common conditions is displayed at the top of the list. As a result, in a case in which the searcher looks into a failure due to an unusual cause or an unusual condition, the search may be prolonged according to the conventional search system. In the information search system according to the present embodiment, a searcher can select by category what they want to search using retrieved information. Thus, as in the example of FIG. 4, not only frequent and common causes (such as control and performance), but also unusual causes (such as waveforms, substrate defects, loads, speed, damages, and commands) can be displayed as a list of search results. The searcher can therefore find a failure cause or a failure condition they want to know more efficiently compared with the conventional search systems.

In the present embodiment, in the keyword dictionary 30, words that represent parts and that are described in a plurality of pieces of information stored in the database 12 are registered in association with parts, which are one of the categories. Similarly, in the keyword dictionary 30, words that represent apparatuses and that are described in the plurality of pieces of information stored in the database 12 are registered in association with apparatuses, which are one of the categories. Further, in the keyword dictionary 30, words that represent equipment and that are described in the plurality of pieces of information stored in the database 12 are registered in association with equipment, which is one of the categories. Moreover, in the keyword dictionary 30, words that represent functional locations and that are described in the plurality of pieces of information stored in the database 12 are registered in association with functional locations, which are one of the categories. The retrieval executor 40 acquires, from the keyword dictionary 30, words that are associated with the category of parts, apparatuses, equipment, or functional locations that has been selected by the searcher, re-sorts retrieved information based on the acquired words, and displays the information to the searcher. In conventional search systems, retrieved information is displayed in order of the number of hits retrieved, for example. For this reason, in a case in which a searcher wants to search for a part failure, if the number of hits that contain information on products using the part is large, information on the products is displayed at the top of the list. As a result, in a case in which the searcher looks into a particular subject, the search may be prolonged because of the abundance of information on various subjects. In the information search system according to the present embodiment, the searcher can select by category a subject they want to search using retrieved information. The searcher may use category selection to specify that the subject to be searched for is a part, a product, equipment, or a functional location. Information on the subject that the searcher wants to know can therefore be found more efficiently compared with conventional search systems.

The candidate search keyword change request acceptance unit 42 accepts, from a searcher, additions and deletions to and from the words registered in the keyword dictionary 30. For example, the searcher can add new words that have similar meanings, so that the retrieval executor 40 can execute retrieval processing by which missed retrieval is further prevented.

Further, the candidate search keyword change request acceptance unit 42 accepts additions, changes, and deletions to and from the categories that are associated with words. For example, the searcher can add new words while associating them with categories, so that the retrieval executor 40 can execute retrieval processing and re-sort processing by which missed retrieval is further prevented.

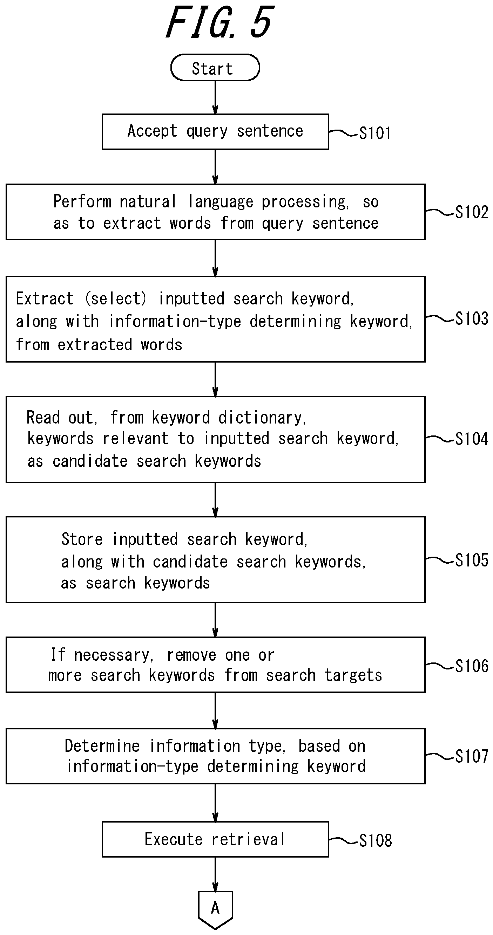

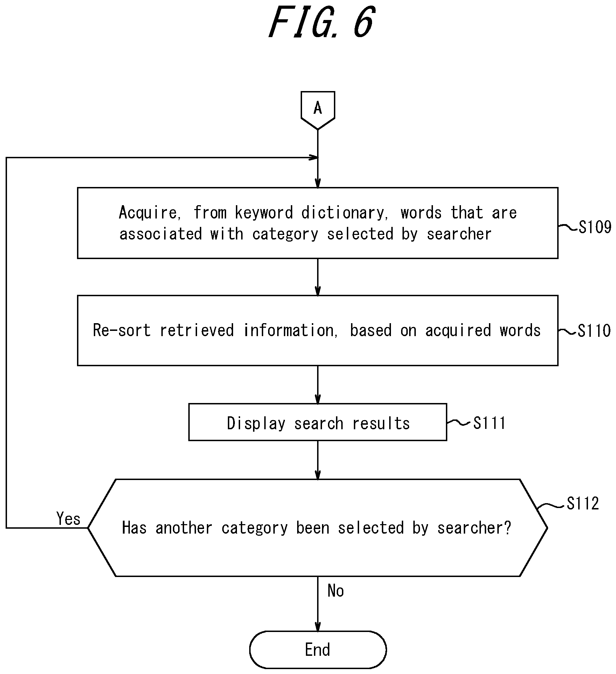

FIG. 5 and FIG. 6 are flowcharts illustrating processing operations of the information search system.

First, the query sentence acceptance unit 26 of the information search apparatus 10 accepts a query sentence that a searcher has entered on a terminal 20 of the searcher via the input apparatus 22 (Step S101).

Secondly, the natural language processor 28 performs natural language processing, such as morphological analysis, on the query sentence received by the query sentence acceptance unit 26, so as to extract words (independent words) (Step S102).

Thirdly, the inputted search keyword extractor 44 extracts (selects) an inputted search keyword from the words extracted by the natural language processing (Step S103).

Subsequently, the candidate search keyword reader 32 refers to the keyword dictionary 30, so as to read out keywords relevant to the inputted search keyword, as candidate search keywords (Step S104).

The search keyword memory 34 stores the inputted search keyword, along with the candidate search keywords read out by the candidate search keyword reader 32 (Step S105).

The information search apparatus 10 causes the display apparatus 24 to display the search keywords stored in the search keyword memory 34, and, if necessary, allows the searcher to remove a search keyword unwanted by them from the displayed plurality of search keywords (Step S106).

The information-type determiner 36 refers to the information-type determining dictionary 38, so as to determine an information type (the purpose of search), based on an information-type determining keyword extracted by the information-type determining keyword extractor 46 (Step S107).

Using selected search keywords, the retrieval executor 40 performs text-based retrieval processing on information stored in a group in the database 12 that corresponds to the information type determined by the information-type determiner 36 or to an information type manually selected by the searcher (Step S108).

The retrieval executor 40 acquires, from the keyword dictionary 30, words that are associated with a category selected by the searcher (Step S109).

The retrieval executor 40 re-sorts retrieved information, based on the acquired words (Step S110).

The information search apparatus 10 displays search results that have been re-sorted, on the display apparatus 24 of the searcher (Step S111).

In a case in which another category has been selected by the searcher (Yes in Step S112), the information search apparatus 10 returns to the processing of Step S109. In a case in which another category has not been selected by the searcher (No in Step S112), the information search apparatus 10 ends the processing.

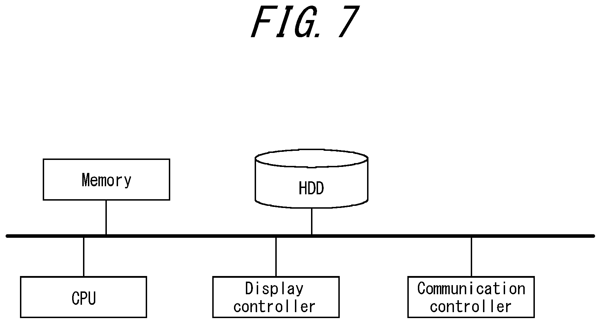

Herein, the information search apparatus 10 and a terminal 20 of a searcher may each be a computer as illustrated in FIG. 7. In the computer, a memory (storage), a CPU (processor), a Hard Disk Drive (HDD), the display apparatus 16 or a display controller that controls display of the display apparatus 24, a communication controller for connecting to the network 18, or the like are connected via a bus. An Operating System (OS) and application programs for implementing the processing in the above embodiment can be stored in the HDD, and when being executed by the CPU, they are read out from the HDD to the memory. If necessary, the CPU controls the display controller, the communication controller, or the like to perform necessary operations. Data that is being processed is stored in the memory and, if necessary, stored in the HDD. The aforementioned various functions are realized by systematic collaboration between hardware, such as the CPU or the memory, the OS, and necessary application programs.

As has been described, according to the information search system of the present embodiment with the above configuration, a searcher can efficiently find information they want to know.

Although the present disclosure has been described based on the illustrated examples, it is not limited to the above embodiment, and various improvements and modifications can be made without departing from the gist thereof.

### INDUSTRIAL APPLICABILITY

According to the present disclosure, an information search system that enables a searcher to efficiently find information they want to know can be provided.

### REFERENCE SIGNS LIST

- 10: Information search apparatus
- 12: Database
- 14: Input apparatus
- 16: Display apparatus
- 18: Network
- 20: Terminal of searcher
- 22: Input apparatus
- 24: Display apparatus
- 26: Query sentence acceptance unit
- 28: Natural language processor
- 30: Keyword Dictionary
- 32: Candidate search keyword reader
- 34: Search keyword memory
- 36: Information-type determiner
- 38: Information-type determining dictionary
- 40: Retrieval executor
- 42: Candidate search keyword change request acceptance unit
- 44: Inputted search keyword extractor
- 46: Information-type determining keyword extractor

## Claims

1. An information search system, comprising:
a database configured to store a plurality of pieces of information that are text-searchable;
a query sentence acceptance unit configured to accept a query sentence in a natural language format;
an inputted search keyword extractor configured to extract an inputted search keyword from the query sentence;
a retrieval executor configured to execute retrieval processing from the database using the inputted search keyword, along with a keyword relevant to the inputted search keyword; and
a keyword dictionary in which words associated with categories are registered, wherein
the retrieval executor is configured to acquire, from the keyword dictionary, words associated with one of the categories selected by a searcher, re-sort information retrieved as a result of the retrieval processing, based on the acquired words, and display the information to the searcher.

2. The information search system according to claim 1, wherein the retrieval executor is configured to re-sort the retrieved information according to the frequency with which each of the acquired words appears, or according to the degree of correlation with each of the acquired words.

3. The information search system according to claim 1 or 2, wherein, in the keyword dictionary, words that represent failure causes and that are described in the plurality of pieces of information are registered in association with causes, which are one of the categories.

4. The information search system according to any one of claims 1 to 3, wherein, in the keyword dictionary, words that represent failure conditions and that are described in the plurality of pieces of information are registered in association with conditions, which are one of the categories.

5. The information search system according to any one of claims 1 to 4, wherein, in the keyword dictionary, words that represent parts and that are described in the plurality of pieces of information are registered in association with parts, which are one of the categories.

6. The information search system according to any one of claims 1 to 5, wherein, in the keyword dictionary, words that represent apparatuses and that are described in the plurality of pieces of information are registered in association with apparatuses, which are one of the categories.

7. The information search system according to any one of claims 1 to 6, wherein, in the keyword dictionary, words that represent equipment and that are described in the plurality of pieces of information are registered in association with equipment, which is one of the categories.

8. The information search system according to any one of claims 1 to 7, wherein, in the keyword dictionary, words that represent functional locations and that are described in the plurality of pieces of information are registered in association with functional locations, which are one of the categories.
